# EUROPÄISCHE PATENTSCHRIFT

(11) **EP 2 461 440 B1**
(45) Veröffentlichungstag und Bekanntmachung des Hinweises auf die Patenterteilung: **02.05.2018**
(21) Anmeldenummer: 11190754.9
(22) Anmeldetag: 25.11.2011
(51) Int. Cl.: H02B 1/056

(54) **STECKSYSTEM**
PLUG-IN SYSTEM
SYSTEME D'ENFICHAGE

(30) Priorität: 03.12.2010 EP 10193709
(43) Veröffentlichungstag der Anmeldung: 06.06.2012
(73) Patentinhaber: ABB Schweiz AG, 5400 Baden (CH)
(72) Erfinder: Schalk, Adelbert, D-79793 Wutöschingen (DE); Ehrensperger, Fritz, CH-8460 Marthalen (CH)
(74) Vertreter: ABB Patent Attorneys

(56) Entgegenhaltungen:
- EP-A2- 1 139 531
- DE-A1- 3 238 483
- GB-A- 2 305 008
- GB-A- 2 351 852

## Beschreibung

### TECHNISCHES GEBIET

Die Erfindung bezieht sich auf das Gebiet der Stecksysteme für Schutzgeräte gemäss dem Oberbegriff von Anspruch 1.

### STAND DER TECHNIK

Stecksysteme werden eingesetzt, um Schutzgeräte auf schnelle und einfache Art und Weise auf das Stecksystem aufzustecken und dadurch eine aufwendige elektrische Kontaktierung der Einspeisung zu vermeiden. In EP 0 229 590 ist ein solches Stecksystem beschrieben. Das Stecksystem weist typischerweise drei Hauptstromschienen, einen Neutralleiter und zwei Hilfsstromschienen auf. Unterschiedlichste Schutzgeräte wie z.B Leistungsschutzschalter und Zubehör können auf ein solches Stecksystem aufgesteckt werden.

Aus EP0753916 A2 ist ebenfalls ein derartiges Stecksystem bekannt. Dieses Stecksystem weist ein Unterteil auf, auf dem Stromschienen angeordnet sind. Die Stromschienen werden von einem Adapterteil kontaktiert, welches an einem Drehpunkt auf dem Unterteil eingehängt wird und dann auf das Unterteil gekippt wird. Das Adapterteil wird arretiert durch eine Rastnase, welche in eine weitere Rastnase im Unterteil einrastet. Auf das Adapterteil wird eine Abdeckplatte aufgesetzt, in welche Leistungsschalter eingeklemmt werden. Auf dem Adapterteil befindet sich zusätzlich noch ein Mikroschalter, welcher geschlossen wird, sobald das Adapterteil auf das Unterteil geklappt ist. Nur durch den Schalter ist gewährleistet, dass das Adapterteil nicht unter Last entfernt werden kann.

Jedoch muss neben dem Unterteil, auf dem sich die Stromschienen befinden, auch das Adapterteil elektrische Kontakte sowie den Mikroschalter und Leitungen aufweisen, da die Kontaktierung der Schalter auf dem Adapterteil erfolgt. Somit enthält das System eine Vielzahl elektrischer Teile und eine Vielzahl von Bauteilen, was sich negativ auf die Störanfälligkeiten und Kosten für das System auswirkt. Der Berührungsschutz ist bestenfalls während des Betriebs gegeben. Wenn für eine Montage das Adapterteil entfernt wird, liegen die Stromschienen offen und es besteht Gefahr für den Monteur, mit den stromführenden Stromschienen in Berührung zu kommen.

Das Adapterteil weist ausserdem grosse Öffnungen auf, in die jeweils die Kontakte komplett eingeführt werden, somit besteht erhöhte Gefahr einer direkten Berührung durch den Monteur. Daher besteht die Gefahr der Berührung, wenn nur die Abdeckplatte entfernt wird und somit der auf der Adapterplatte befindliche Mikroschalter noch geschlossen ist.

Ein weiteres aus dem Stand der Technik bekanntes Stecksystem enthält Stromschienen, auf denen Platten als Berührungsschutz aus elektrisch isolierendem Material angebracht werden können, um nicht benutzte Steckplätze des Systems zu bedecken und somit berührungssicher zu machen. Diese Platten werden ähnlich wie die Schutzgeräte auf dieselbe Art, aber alternativ zu ihnen auf die Steckplätze aufgesteckt und können einen oder auch mehrere Steckplätze besetzen. Nachteil dieses Systems ist, dass der Betrieb des Systems mit oder auch ohne die Isolierplatten möglich ist, ohne dass das System dies erkennt, und somit kein sicherer Berührungsschutz vorhanden ist, da das System nicht erkennt, ob noch freie Steckplätze vorhanden sind. Ausserdem müssen die Isolierplatten entsprechend der Anzahl freier Steckplätze belegt werden, also Isolierplatten unterschiedlicher Breite vorhanden sein. Während des Austauschs eines Schutzgerätes stellen diese Isolierplatten keinen Schutz mehr da, da nach Entfernen eines Schutzgerätes an seiner Stelle offene Kontaktflächen zu den Stromschienen vorhanden sind.

Die Anforderungen an die Verfügbarkeit der elektrischen Versorgung steigt jedoch. Mehr und mehr müssen Wartungs- und Erweiterungsarbeiten an Niederspannungsinstallationen unter Zeitdruck und daher unter Spannung durchgeführt werden, um die Nichtverfügbarkeitszeiten klein zu halten (Banken, Versicherungen, Telekommunikation Flughäfen, ..).

GB 2 351 852 A zeigt ein Bus Bar System, bei dem Schutzschalter auf zwei einander gegenüberliegenden Seiten des Bus Systems aufgesteckt werden können. Eine Deckplatte sichert Berührungsschutz, indem sie auf die Stromschienen selbst oder auf Abstandshalter zwischen den Stromschienen aufgesteckt wird. Die Deckplatte überdeckt dabei die Stromschienen, so dass die Schutzschalter die Schienen seitlich kontaktieren. Die Schutzschalter sind allerdings mit und ohne Deckplatte aufsteckbar und selbst bei aufgesteckter Deckplatte besteht kein Berührungsschutz, wenn die Schutzgeräte entfernt werden. Dafür kann zwar zusätzlich eine Isolierplatte aufgesteckt werden, aber da der Betrieb auch ohne ohne Isolierplatte möglich ist, bietet diese Platte auch nur eine bedingte Sicherheit.

EP 1 139 531 A2 zeigt ein System zum Anschluss mehrerer aufsteckbarer Schutzschalter. Eine optional aufsteckbare Deckplatte überdeckt die Schienen, welche über Schlitze in der Deckplatte kontaktiert werden. Nur bei aufgesteckte Platte besteht Fingerprüfsicherheit. Die elektrischen Verbindungen zwischen den Schutzgeräten und den Sammelschienen werden über Verbindungsteile erstellt, welche entsprechend der Position der Schiene unterschiedliche Länge aufweisen. Die Verbindungsteile werden von der Schiene nach aussen geführt und dort von dem Schutzgerät kontaktiert.

Derartige Systeme haben den Nachteil, dass die Platten, welche Berührungsschutz gewährleisten sollen, einfach zu entfernen sind, so dass ein Techniker, welcher am System arbeitet, problemlos den Schutz entfernen kann und dann mit stromführenden Teilen in Berührung kommen kann. Auch ist eine Montage der Schutzgeräte ohne Schutz möglich, so dass die Platten keinen sicheren Schutz bieten.

DE 32 38 483 A1 zeigt ein Sammelschienensystem, welches nur ausserhalb der Anschlussstellen Berührungsschutz bietet, d.h. an den Anschlussstellen ist kein Berührungsschutz gegeben.

### DARSTELLUNG DER ERFINDUNG

Aufgabe der vorliegenden Erfindung ist es daher, ein Stecksystem zu schaffen mit einem Berührungsschutz, der während des Betriebs, aber auch während Wartungs-, Reparatur- oder Erweiterungsarbeiten am System sichergestellt ist, wobei zur Erhöhung der Sicherheit Arbeiten an den Stromschienen nur im stromlosen Zustand möglich sein sollen.

Diese Aufgabe wird erfindungsgemäss durch ein Stecksystem mit den Merkmalen des Anspruchs 1 und durch ein Oberteil für ein Stecksystem mit den Merkmalen des Anspruchs 14 gelöst.

Erfindungsgemäss weist das Stecksystem auf einer Unterseite ein Unterteil, auf dem Stromschienen anordenbar sind, und auf einer der Unterseite gegenüber angeordneten Oberseite ein zerstörungsfrei vom Unterteil lösbares Oberteil aus elektrisch isolierendem Material auf. Das Oberteil, auf dem Schutzgeräte mit elektrischen Kontakten anordenbar sind, weist Öffnungen auf, durch welche die Stromschienen des Stecksystems direkt von den elektrischen Kontakten der Schutzgeräte kontaktierbar sind. Die Öffnungen sind derart gestaltet, dass das Stecksystem allseitig berührungssicher nach IP XXB (EN 60529) ist. Dabei gewährleistet das Oberteil den Berührungsschutz auf der Oberseite.

Das Oberteil ist daher bezüglich Berührungsschutz, Luft- und Kriechstrecken sowie Schalt- und Störlichtbogensicherheit so ausgeführt, dass sowohl Fingersicherheit nach IPxxB (EN 60529) als auch die Schalt- und Störlichtbogensicherheit gegeben sind. Letzteres ist aufgrund der Tatsache gegeben, dass im bestimmungsgemässen Gebrauch wie auch im Fall einer vorhersehbaren Fehlanwendung kein Kurzschluss entstehen kann. Dazu gehört auch die Störlichtbogensicherheit gegenüber Herunterfallen von Werkzeug oder anderen Metallteilen sowie abgeschnittenen Drähte.

Durch das erfindungsgemässe Oberteil ist das Stecksystem derart abgedeckt, dass ein Monteur nicht versehentlich mit den Stromschienen in Berührung kommen kann. Da die Schutzgeräte im erfindungsgemässen Stecksystem durch das Oberteil hindurch aufgesteckt werden zur Kontaktierung der elektrischen Kontakte mit den Stromschienen, wird durch das Aufstecken der Schutzgeräte auch verhindert, dass das zwischen Unterteil und Schutzgeräten angeordnete Oberteil entfernt werden kann.

Weiterhin ist bei montiertem Oberteil ein Berührungsschutz auf dem gesamten Stecksystem vorhanden, d.h. es werden nicht nur freie Steckplätze abgedeckt, sondern der Schutz ist auch dann gegeben, wenn für eine Wartung oder Montage zwischenzeitlich ein Schutzgerät entfernt wird.

Das System ist ausserdem einfach zu implementieren, weil keine zusätzlichen Adapter für die elektrische Kontaktierung der Schutzgeräte notwendig sind, sondern die Schutzgeräte direkt durch das Oberteil hindurch mit dem auf dem Unterteil angeordneten Stromschienen kontaktierbar sind.

Das Oberteil bietet einen sicheren Schutz, weil es anders als in EP 0 735 916 A2 selbst keine elektrischen Elemente beinhaltet, sondern ein rein mechanisches Teil ist, also ohne elektrisch leitende Teile und somit eine geringe Fehleranfälligkeit aufweist.

Gemäss einer bevorzugten Ausführungsform ist das Oberteil ausschliesslich von der Unterseite des Stecksystems her von dem Unterteil lösbar. Dies erhöht weiter die Sicherheit des Systems, weil dadurch sichergestellt ist, dass der Monteur, falls er das Oberteil entfernen will, das Stecksystem erst ausbauen muss und somit im Wartungs- oder Montagefall die Stromschienen stromlos sind.

Gemäss einer weiteren bevorzugten Ausführungsform gemäss Anspruch 7 bis 9 weist das Oberteil zusätzliche Mittel auf, durch welche die Schutzgeräte nur bei montiertem Oberteil und somit nur bei abgedeckten Stromschienen auf das Stecksystem aufsteckbar sind. Es ist bei dieser Ausführungsform nicht möglich, die Schutzgeräte ohne Oberteil aufzustecken. Der Vorteil einer solchen Ausgestaltung ist, dass die Sicherheit des Systems weiter erhöht wird, weil es nicht möglich ist, ohne den durch das Oberteil sichergestellten Berührungsschutz die Schutzgeräte aufzustecken.

Weitere bevorzugte Ausführungsformen der Erfindung ergeben sich aus den weiteren abhängigen Ansprüchen und der Detailbeschreibung.

### KURZE BESCHREIBUNG DER ZEICHNUNGEN

Nachfolgend werden Ausführungsformen der Erfindung anhand der Zeichnung detailliert erläutert. Hierbei zeigt rein schematisch:
- FIG. 1: erfindungsgemässes Oberteil für ein Stecksystem in Aufsicht auf die Oberseite;
- FIG. 2: erfindungsgemässes Oberteil für ein Stecksystem von unten;
- FIG. 3: erfindungsgemässes Oberteil für ein Stecksystem von der Seite;
- FIG.4: erfindungsgemässes Stecksystem mit Unterteil und Oberteil, aufgeklappt, von der Seite;
- FIG. 5: erfindungsgemässes Stecksystem mit Unterteil und Oberteil, aufgeklappt, von schräg oben;
- FIG.6: erfindungsgemässes Stecksystem mit Unterteil und Oberteil, zusammengeklappt, im Schnitt;
- FIG. 7: erfindungsgemässes Stecksystem mit Schutzgerät, aufgeklappt, von der Seite; und
- FIG. 8: erfindungsgemässes Stecksystem mit Schutzgerät, zusammengeklappt, von der Seite; und
- FIG. 9: weiteres erfindungsgemässes Stecksystem mit Unterteil und Oberteil, zusammengeklappt, im Schnitt.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### WEG ZUR AUSFÜHRUNG DER ERFINDUNG

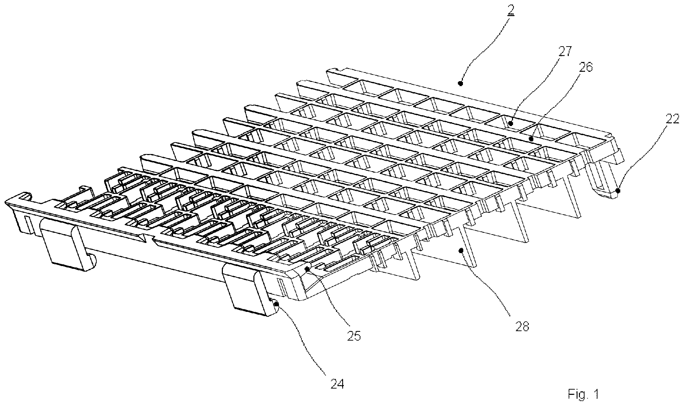

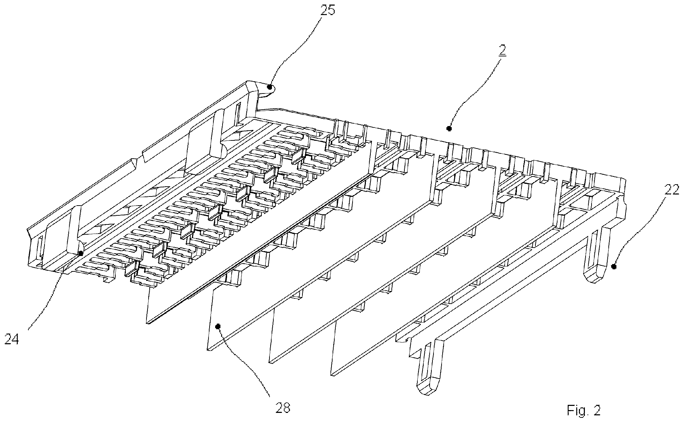

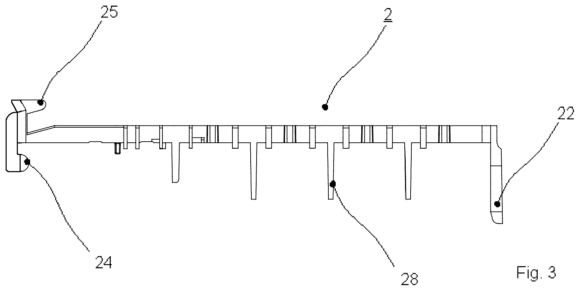

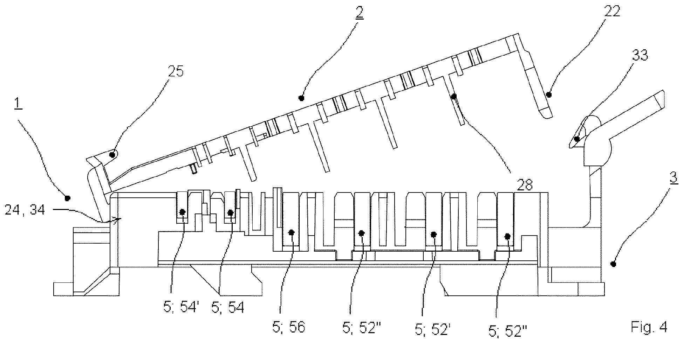

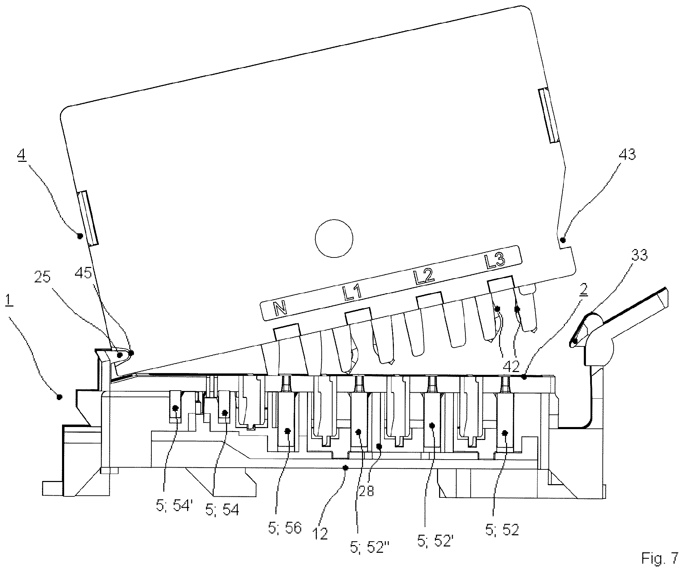

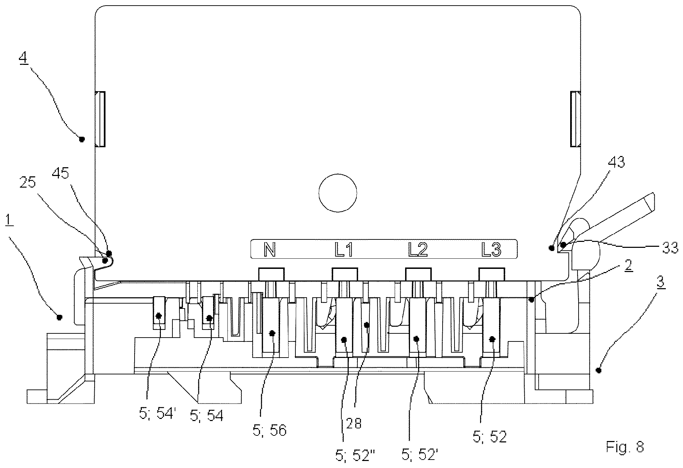

Fig. 1 zeigt ein erfindungsgemässes Oberteil 2 für ein Stecksystem 1 in schräger Aufsicht, auf dem Schutzgeräte 4 mit elektrischen Kontakten 42 (dargestellt in den Figuren 7 und 8) anordenbar sind. Die Figuren 2 und 3 zeigen das erfindungsgemässe Oberteil von schräg unten, bzw. von der Seite. Die Figuren 4 bis 6 zeigen das gesamte Stecksystem 1 in unterschiedlichen Aufbaustadien mit einem Unterteil 3 auf einer Unterseite 12, auf dem Stromschienen 5 angeordnet sind, und mit einem auf der Unterseite 12 gegenüber angeordneten Oberseite 11 ein zerstörungsfrei vom Unterteil 3 lösbares Oberteil 2 aus elektrisch isolierendem Material. Das Stecksystem 1 weist beispielsweise als Stromschienen Hauptstromschienen 52, 52', 52" und je nach Anwendung des Systems auch Neutralleiter 56 oder Hilfsstromschienen 54, 54' auf. Das Oberteil 2 weist Öffnungen 27 auf, durch welche die Stromschienen 5 direkt von den elektrischen Kontakten 42 der Schutzgeräte kontaktierbar sind. Die Öffnungen 27 sind derart gestaltet, dass das Stecksystem 1 auf der Oberseite 11 berührungssicher nach IP XXB ist. Berührungssicher nach IP XXB (EN 60529) bedeutet, dass ein genormter Prüffinger bis zu 80 mm in den zu prüfenden Gegenstand eindringen darf, ohne gefährliche Teile zu berühren.

Hierzu weist das Oberteil 2 in der Ebene der Oberseite 11 erste Stege 26 auf, so dass mindestens eine der Stromschienen 5 (wie in Fig. 4 dargestellt) mindestens teilweise abdeckbar ist. Die Schutzgeräte 4 können die Stromschienen entweder von oben oder von der Seite her kontaktieren. Bei abgedeckten Stromschienen sind die Stromschienen nur noch von der Seite kontaktierbar. Ein hierfür geeigneter elektrischer Kontakt ist aus EP 0229590 bekannt. Das Schutzgerät 4 weist hierbei elektrische Kontakte 42 auf, welche derart konvex gebogen sind, dass sie in aufgestecktem Zustand des Schutzgerätes 4 die Stromschienen 5 von der Seite berühren. Oftmals weist das Schutzgerät 4 auch Kontakte auf, welche u-förmig mit der Öffnung zur Stromschiene hin und im Bereich der beiden lateralen, zueinander parallelen Teile des "U's" leicht nach innen gebogen sind (Tulpen- oder Lyraform), so dass die Stromschiene von beiden Seiten kontaktiert wird.

Es ist auch möglich, dass die Stromschienen 5 nicht abgedeckt sind, sondern die ersten Stege 26 zwischen den Stromschienen angeordnet sind, so dass die Berührungssicherheit gewährleistet ist. Die elektrischen Kontakte 42 der Schutzgeräte 4 können in diesem Fall die Stromschienen von oben kontaktieren.

Das Oberteil 2 kann weiterhin auch zweite Stege 28 aufweisen, welche in einer Ebene senkrecht zu der Ebene der ersten Stege 26 angeordnet sind. Diese Stege 28 sind als Platten zwischen jeweils zwei benachbarten Stromschienen 5 angeordnet, die somit durch die zweiten Stege 28 getrennt werden. Hierdurch wird die Steifigkeit des Oberteils sowie Luft- und Kriechstrecken zwischen den Stromschienen 5 verbessert.

Das Oberteil 2 und das Unterteil 3 eines Stecksystems 1 sind derart miteinander verbunden, dass sie zerstörungsfrei voneinander gelöst werden können. Dies ist wichtig für Montage, Wartungs- oder Reparaturarbeiten.

Im folgenden sind Beispiele gezeigt, wie das Oberteil- und Unterteil 2, 3 miteinander lösbar verbunden werden können. Typischerweise gibt es mindestens zwei Verbindungen an gegenüber liegenden lateralen Seite, welche senkrecht zur Oberseite 11 liegen. Mindestens eine der Verbindungen ist typischerweise eine Rastverbindung, während die andere Verbindung ebenfalls eine Rastverbindung oder eine Kippverbindung sein kann. Bei der Rastverbindung rastet ein Einrastelement in eine Einrastfläche ein. Zum Lösen ist eine mechanische Kraft aufzuwenden, um die beiden ineinander eingerasteten Teile voneinander zu lösen. Bei der Kippverbindung ist ein Drehen der Teile gegeneinander zum Lösen ausreichend.

In den Figuren 4 bis 6 ist es eine weitere exemplarische Ausführungsform gezeigt, bei der das Oberteil 2 und das Unterteil 3 ineinander einrasten. Hierzu kann das Oberteil 2 ein erstes Einrastelement 22 aufweisen, welches mit einem zweiten Einrastelement 32 des Unterteils ineinander einrastbar ist. Beispielsweise kann das erste Einrastelement 22 als Lasche ausgebildet sein, welche in ein als Einrastnase ausgebildetes zweites Einrastelement 32 des Unterteils einschnappt. Die Einrastelemente überlappen im eingerasteten Zustand und müssen zur Lösung der Verbindung aneinander vorbeigeschoben werden. Ebenso können aber auch beide Einrastelemente 22, 32 als Einrastnasen ausgebildet sein.

Weiterhin kann die Einrastung auch über ein weiteres Element erfolgen, beispielsweise in Form einer Lasche, in welche als Einrastnasen ausgebildete Einrastelemente auf dem Ober- und Unterteil 2, 3 eingehängt werden. Eine Einrastnase wird in die mit der anderen Einrastnase verbundene Lasche eingehängt und somit eingerastet. Ebenso könnte auch ein weiteres Einrastelement mit zwei Einrastnasen ausgestattet sein, wobei jeweils eine Einrastnase dieses weiteren Elements mit den Einrastnasen des Ober- und Unterteils einrastet.

Alternativ können das Ober- und Unterteil auch miteinander verschraubt werden. Weitere alternative lösbare Verbindungen oder Kombination von verschiedenen lösbaren Verbindungen sind dem Fachmann wohl bekannt und sollen für diese Erfindung mit umfasst sein.

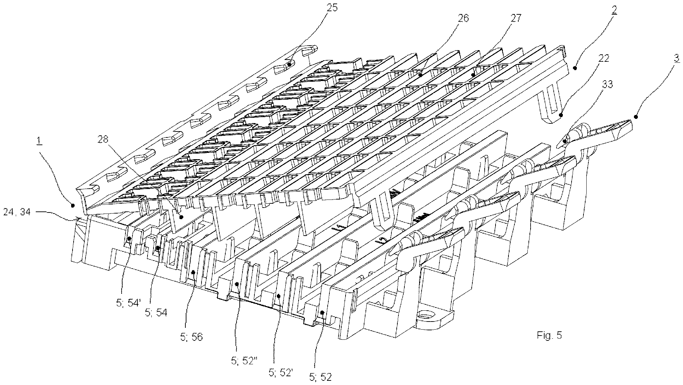

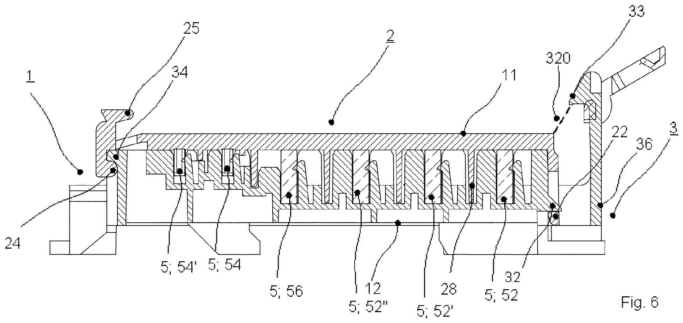

Das Oberteil 2 kann in einer weiteren Ausführungsform ein erstes Kippelement 24 aufweisen, beispielsweise in Form einer abgerundeten Verdickung (Zylindersegment), welche an einer zur Oberseite 11 des Oberteils 2 gelegenen lateralen Seite sich befindet. Im Unterteil 3 ist ebenso ein zweites Kippelement 34 (zum Beispiel ebenso als eine Verdickung oder auch eine Verjüngung, in oder an die das erste Kippelement 24 gelegt werden kann) an derselben lateralen Seite angeordnet. Wie in der Seitenansicht in Fig. 6 gezeigt werden beide Kippelemente 24, 34 zusammengeführt und das Oberteil 2 kann nun an einem Drehpunkt gegenüber dem Unterteil 3 gekippt werden, so dass die Teile 2, 3 zusammengeklappt werden können. Fig. 5 zeigt das Stecksystem in schräger Aufsicht in geöffnetem Zustand, wobei das Ober- und Unterteil 2, 3 schon an ihren Kippelementen 24, 34 zusammengeführt sind.

Vorzugsweise sind die ersten und zweiten Einrastelemente 22, 32 auf einer der lateralen Seite, auf der die Kippelemente 24, 34 angeordnet sind, gegenüberliegenden Seite angeordnet, so dass das Oberteil 2 zuerst mit dem Unterteil 3 zusammengeklappt und dann ineinander eingerastet (Fig. 6).

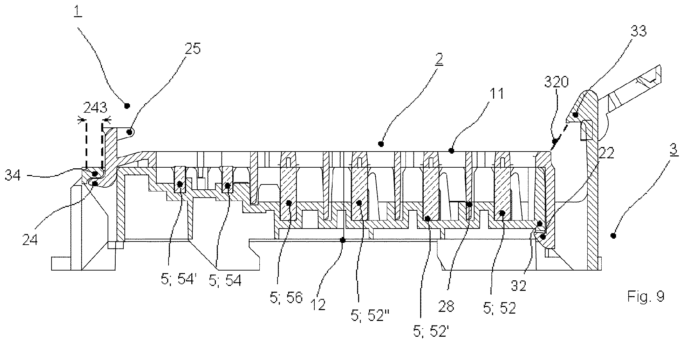

Das erste Kippelement 24 des Oberteils 2 kann sogar derart gestaltet sein, dass es so weit in das zweite Kippelement 34 hineinragt, dass für die Montage zwingend zuerst das Oberteil 2 an seinem ersten Kippelement 24 in das Unterteil 3 an seinem zweiten Kippelement 34 eingehängt und dann zusammengeklappt werden muss, bevor es dann mit dem Unterteil 3 eingerastet werden kann (Fig. 9). Dazu kann das erste Kippelement 24 mit dem zweiten Kippelement 34 im zusammengebauten Zustand in einer lateralen Ebene, welche parallel zur Oberseite 11 liegt, beispielsweise um einen Überlappungsbereich 243 von 3 mm oder sogar mehr als 5 mm miteinander überlappen. Durch eine derartig grosse Überlappung muss das Verkippen vor dem Einrasten erfolgen.

In einer weiteren bevorzugten Ausführungsform sind die Einrastelemente 22, 32 derart ausgebildet, dass das Oberteil 2 ausschliesslich von der Unterseite 12 des Stecksystems 1 her von dem Unterteil 3 lösbar ist. Dazu ist beispielsweise die in Fig. 6 gezeigte Einrastnase 32 des Unterteils an der Unterseite des Unterteils 3 angebracht. Zum Lösen der Verbindung muss die Lasche 22 von der Unterseite 12 her mindestens um den Abstand, den die Einrastnase 32 vom Unterteil vorsteht, von dem Unterteil entfernt werden und dann von der Einrastnase 32 weggeschoben werden.

Auf das Stecksystem 1 sind Schutzgeräte 4 aufsteckbar. Es ist sowohl möglich, dass das Oberteil 2 und Unterteil 3 zusammengebaut und erst dann die Schutzgeräte 4 aufgesteckt werden (Fig. 7). Alternativ können die Schutzgeräte 4 zuerst auf das Oberteil 2 aufgesteckt und dieses dann auf das Unterteil 3 eingehakt, bzw. geklappt und anschliessend eingerastet werden.

Zur lösbaren Verbindung eines Schutzgerätes 4 mit dem Oberteil 2 kann das Oberteil 2 ein drittes Kippelement 25 und das Schutzgerät 4 ein viertes Kippelement 45 aufweisen. Diese Kippelemente 25, 45 wirken ähnlich wie bei der Kippverbindung zwischen Ober- und Unterteil 2, 3 derart zusammen, dass das Schutzgerät 4 gegen das Oberteil 2 kippbar ist. Das Unterteil 3 kann ein drittes Einrastelement 33 und das Schutzgerät 4 ein viertes Einrastelement 43 aufweisen, wobei das dritte und vierte Einrastelement 33, 43 miteinander einrastbar sind. Somit wird in dieser Ausführungsform das Schutzgerät 4 auf einer Seite mit dem Oberteil 2 zusammengeklappt und auf der anderen Seite mit dem Unterteil 3 eingerastet.

Ebenso könnte aber auch das Schutzgerät 4 statt mit einer Einrastung mit dem Unterteil auch nur mit dem Oberteil 2 verbunden sein und keine direkte Verbindung zum Unterteil aufweisen. Dazu kann beispielsweise das Schutzgerät 4 ein sechstes Einrastelement aufweisen und das Oberteil 2 ein fünftes Einrastelement, welche miteinander einrasten. Wie schon vorgängig beschrieben, kann auch hier das Schutzgerät 4 mit dem Oberteil zusammengeklappt und/oder eingerastet werden.

Fig. 8 zeigt das erfindungsgemässe Stecksystem mit aufgestecktem Schutzgerät 4, welches mit dem Oberteil 2 zusammengeklappt (Kippelemente 25, 45) und mit dem Unterteil 3 eingerastet ist (Einrastelemente 33, 43).

Alternativ kann auch das Schutzgerät 4 und das Unterteil 3 Kippelemente und Einrastelemente oder auch ausschliesslich Einrastelemente aufweisen zum gegenseitigen Einrasten und Zusammenklappen, so dass das Schutzgerät 4 nur mit dem Unterteil 3 zerstörungsfrei lösbar verbunden wird. Auch hier ist es möglich, dass das Schutzgerät 4 ebenfalls mit dem Unterteil 3 Kippelemente aufweisen und ein Einrasten über Einrastelemente auf dem Oberteil 2 und Schutzgerät 4 vorgenommen wird.

In einer anderen Alternative werden die Schutzgeräte 4 auf dem Ober- und/oder Unterteil 2, 3 festgeschraubt.

Typischerweise sind alle für ein Schutzgerät 4 zur Einrastung oder zum Kippen notwendigen Kipp- oder Einrastelement in einer Ebene senkrecht zu der Längsrichtung der Stromschienen 5 und zur Oberseite 11 angeordnet.

Das Oberteil 2 und das zweite Einrastelement 32 können vorzugsweise einen Abstand 320 aufweisen, der maximal 5 mm, vorzugsweise 3 mm oder sogar kleiner als 2 mm gross ist (Fig. 6). Unter Abstand ist der minimale Abstand des Oberteils 2 zum Unterteil 3 in einer senkrecht zur Oberseite 11 und zu den Stromschienen 5 gelegenen Ebene, in welcher Ebene das zweite Einrastelement 32 angeordnet ist, zu verstehen. Der Abstand ist im Bereich zwischen der Oberseite 11 und dem zweiten Einrastelement 32 zu ermitteln, also in dem Bereich, durch den ein Werkzeug hindurchgeführt werden müsste, wenn man die Einrastung von der Oberseite 11 her lösen wollte. Dieser Abstand stellt somit die kleinste Öffnung dar, die von einem Werkzeug zu überwinden wäre beim Versuch, mittels des Werkzeugs die Verbindung von der Oberseite 11 her zu lösen.

Bei einem derart kleinen Abstand 320 wird es zusätzlich erschwert, wenn nicht gar verunmöglicht, die Einrastung zwischen Unterteil- und Oberteil 2, 3 selbst mit Werkzeugen von der Oberseite 11 her zu lösen.

Dies kann beispielsweise erreicht werden, indem das Unterteil 3 einen lateralen Rand 36 aufweist (also senkrecht zur Unterseite 12), welcher beabstandet ist zum zweiten Einrastelement 32, so dass das erste Einrastelement 22 in dem Zwischenraum zwischen dem Rand 36 und dem zweiten Einrastelement 32 hindurchgeführt wird, um mit dem zweiten Einrastelement (32) einzurasten (Fig. 6). Der minimale Abstand des Oberteils 2 zum Unterteil 3 in einem Bereich zwischen dem zweiten Einrastelement 32 und dem Rand 36, also dem Bereich, in den ein Werkzeug zur Lösung der Einrastverbindung eingeführt werden müsste, beträgt maximal 8 mm, vorzugsweise 6 oder sogar nur 5 mm.

Auch das dritte Einrastelement 33 oder ggf. ein Kippelement des Unterteils zur Verbindung mit dem Schutzgerät 4 kann an dem Rand angeordnet sein. Auch dadurch entsteht in Spalt, in dem das erste Einrastelement 22 bis zum zweiten Einrastelement 32 einzuführen ist. Auch dieser Spalt kann als Abstand 320 erfindungsgemäss klein ausgebildet sein.

**BEZUGSZEICHENLISTE**

| | | | |
|---|---|---|---|
| 1 | Stecksystem | 34 | Zweites Kippelement (Verbindung mit Oberteil) |
| 11 | Oberseite | 36 | Rand |
| 12 | Unterseite | 4 | Schutzgerät |
| 2 | Oberteil | 42 | Elektrischer Kontakt |
| 22 | Erstes Einrastelement (Verbindung mit Unterteil) | 43 | Viertes Einrastelement (Verbindung mit Unterteil) |
| 24 | Erstes Kippelement (Verbindung mit Unterteil) | 45 | Viertes Kippelement (Verbindung mit Oberteil) |
| 243 | Überlappungsbereich | 5 | Stromschiene |
| 25 | Drittes Kippelement (Verbindung mit Schutzgerät) | 52, 52', 52" | Hauptstromschiene |
| 26 | Erster Steg | 54, 54' | Hilfsstromschiene |
| 27 | Öffnung | 56 | Neutralleiter |
| 28 | Zweiter Steg | | |
| 3 | Unterteil | | |
| 32 | Zweites Einrastelement (Verbindung mit Oberteil) | | |
| 320 | Abstand | | |
| 33 | Drittes Einrastelement (Verbindung mit Schutzgerät) | | |

## Patentansprüche

1. Stecksystem (1) mit Steckplätzen zur Aufnahme von Schutzgeräten (4) mit elektrischen Kontakten (42), wobei das Stecksystem ein Unterteil (3) auf einer Unterseite (12), auf dem Stromschienen (5) anordenbar sind, und ein auf einer der Unterseite (12) gegenüber angeordneten Oberseite (11) zerstörungsfrei vom Unterteil (3) lösbares Oberteil (2) aus elektrisch isolierendem Material aufweist, wobei das Oberteil (2) Öffnungen (27) aufweist, durch welche die Stromschienen (5) beim Aufstecken der Schutzgeräte auf das Stecksystem direkt von den elektrischen Kontakten (42) der Schutzgeräte kontaktierbar sind, und wobei die Öffnungen (27) derart gestaltet sind, dass das Stecksystem (1) auf der Oberseite (11) berührungssicher nach IP XXB ist, wobei das Oberteil (2) und Unterteil (3) derart ineinander einrastbar oder miteinander verschraubbar sind, dass das Oberteil (2) ausschliesslich von der Unterseite (12) des Stecksystems her von dem Unterteil (3) lösbar ist, **dadurch gekennzeichnet dass** an den Steckplätzen alle Stromschienen (5) von der Oberseite (11) her zugänglich sind.

2. Stecksystem (1) nach Anspruch 1, **dadurch gekennzeichnet, dass** das Oberteil (2) in der Ebene der Oberseite (11) erste Stege (26) aufweist, so dass mindestens eine Stromschiene (5) durch die ersten Stege (26) des Oberteils teilweise oder vollständig abdeckbar ist.

3. Stecksystem (1) nach Anspruch 2, **dadurch gekennzeichnet, dass** die ersten Stege (26) derart ausgebildet sind, dass mindestens eine teilweise abdeckbare Stromschiene (5) durch ein Schutzgerät (4) seitlich kontaktierbar ist.

4. Stecksystem (1) nach einem der Ansprüche 1 bis 3, **dadurch gekennzeichnet, dass** das Oberteil (2) zweite Stege (28) aufweist, welche in einer Ebene senkrecht zu der Oberseite (11) angeordnet sind, und welche zweite Stege (28) zwischen jeweils zwei Stromschienen (5) angeordnet sind.

5. Stecksystem (1) nach einem der Ansprüche 1 bis 4, **dadurch gekennzeichnet, dass** das Oberteil (2) ein erstes Einrastelement (22) und das Unterteil (3) ein zweites Einrastelement (32) zum Einrasten des Oberteils (2) mit dem Unterteil (3) aufweisen, wobei diese Einrastelemente (22, 32) derart angeordnet und gestaltet sind, dass das Oberteil (2) ausschliesslich von der Unterseite (12) des Stecksystems her von dem Unterteil (3) lösbar ist.

6. Stecksystem (1) nach Anspruch 5, **dadurch gekennzeichnet, dass** mindestens eins der ersten und zweiten Einrastelemente (22, 32) als Einrastnase ausgebildet ist, welches mit dem anderen, als weitere Einrastnase oder Lasche ausgebildeten Einrastelement (32, 22) einrastbar ist.

7. Stecksystem (1) nach einem der Ansprüche 1 bis 6, **dadurch gekennzeichnet, dass** das Oberteil (2) ein erstes Kippelement (24) aufweist und das Unterteil (3) ein zweites Kippelement (34) aufweist, welche derart zusammenwirken, dass das Oberteil (2) gegen das Unterteil (3) kippbar ist,

8. Stecksystem (1) nach einem der Ansprüche 1 bis 7, **dadurch gekennzeichnet, dass** das Oberteil (2) ein drittes Kippelement (25) aufweist und das Schutzgerät (4) ein viertes Kippelement (45) aufweist, welche derart zusammenwirken, dass das Schutzgerät (4) gegen das Oberteil (2) kippbar ist.

9. Stecksystem (1) nach einem der Ansprüche 1 bis 7, **dadurch gekennzeichnet, dass** das Oberteil (2) ein fünftes Einrastelement und das Schutzgerät (4) ein sechstes Einrastelement aufweisen, welche derart zusammenwirken, dass das Schutzgerät (4) mit dem Oberteil (2) einrastbar ist.

10. Stecksystem (1) nach einem der Ansprüche 1 bis 8, **dadurch gekennzeichnet, dass** das Unterteil (3) ein drittes Einrastelement (33) und das Schutzgerät (4) ein viertes Einrastelement 43) aufweist, wobei das dritte und vierte Einrastelement (33, 43) ineinander einrastbar sind.

11. Stecksystem (1) nach einem der Ansprüche 1 bis 9, **dadurch gekennzeichnet, dass** das Unterteil (3) ein fünftes Kippelement und das Schutzgerät (4) ein sechstes Kippelement aufweist, welche derart zusammenwirken, dass das Schutzgerät (4) gegen das Unterteil (3) kippbar ist.

12. Stecksystem (1) nach Anspruch 10, **dadurch gekennzeichnet, dass** das Oberteil (2) ein erstes Einrastelement (22) und das Unterteil (3) ein zweites Einrastelement (32) zum Einrasten des Oberteils (2) mit dem Unterteil (3) aufweisen, dass das Unterteil (3) einen lateralen Rand (36) aufweist, welcher beabstandet ist zum zweiten Einrastelement (32), und dass, der minimale Abstand des Oberteils (2) zum Unterteil (3) in einem Bereich zwischen dem zweiten Einrastelement (32) und dem Rand (36) maximal 5 mm beträgt.

13. Stecksystem (1) nach Anspruch 11, **dadurch gekennzeichnet, dass** das Oberteil (2) ein erstes Kippelement (24) aufweist und das Unterteil (3) ein zweites Kippelement (34) aufweist, welche derart zusammenwirken, dass das Oberteil (2) gegen das Unterteil (3) kippbar ist, und dass das erste Kippelement (24) des Oberteils (2) derart gestaltet ist, dass es mit dem zweiten Kippelement (34) des Unterteils mindestens um einen Überlappungsbereich (243) von 3 mm überlappt.

14. Stecksystem (1) nach Anspruch 1, **dadurch gekennzeichnet, dass** am Steckplatz die Stromschienen (5) alle von der Oberseite (11) her zugänglich sind.

15. Oberteil zum Einsatz in ein Stecksystem (1) nach einem der Ansprüche 1 bis 13.

16. Stecksystem nach einem der vorangegangenen Ansprüche, wobei das Stecksystem (1) eine Mehrzahl von Stromschienen (5) aufweist.

17. Stecksystem nach Anspruch 16, wobei eine Mehrzahl von Schutzgeräten (4) mit elektrischen Kontakten (42), derart am Stecksystem befestigt ist, dass die elektrische Kontakte (42) die Stromschienen (5) elektrisch kontaktieren.

18. Stecksystem nach Anspruch 16 oder 17, **dadurch gekennzeichnet, dass** die Stromschienen (5) beim Aufstecken der Schutzgeräte auf das Stecksystem direkt von den elektrischen Kontakten (42) der Schutzgeräte selbsttätig kontaktierbar sind.

## Claims

1. Plug-in system (1) having slots for accommodating protective devices (4) having electrical contacts (42), wherein the plug-in system has a lower part (3) on an underside (12), on which part busbars (5) can be arranged, and an upper part (2) which is made of electrically insulating material and is releasable from the lower part (3) in a non-destructive manner on a top side (11) arranged opposite the underside (12), the upper part (2) having openings (27) through which the electrical contacts (42) of the protective devices can make direct contact with the busbars (5) when the protective devices are plugged onto the plug-in system, and the openings (27) being configured in such a manner that the plug-in system (1) is shockproof to IP XXB on the top side (11), the upper part (2) and lower part (3) being latchable into one another or being screwable to one another in such a manner that the upper part (2) is releasable from the lower part (3) only from the underside (12) of the plug-in system, **characterized in that** all busbars (5) are accessible from the top side (11) at the slots.

2. Plug-in system (1) according to Claim 1, **characterized in that** the upper part (2) has first webs (26) in the plane of the top side (11), with the result that at least one busbar (5) is partially or completely coverable by the first webs (26) of the upper part.

3. Plug-in system (1) according to Claim 2, **characterized in that** the first webs (26) are formed in such a manner that a protective device (4) can laterally make contact with at least one partially coverable busbar (5).

4. Plug-in system (1) according to one of Claims 1 to 3, **characterized in that** the upper part (2) has second webs (28) which are arranged in a plane perpendicular to the top side (11) and are arranged between two respective busbars (5).

5. Plug-in system (1) according to one of Claims 1 to 4, **characterized in that** the upper part (2) has a first latching-in element (22) and the lower part (3) has a second latching-in element (32) for latching the upper part (2) to the lower part (3), these latching-in elements (22, 32) being arranged and configured in such a manner that the upper part (2) is releasable from the lower part (3) only from the underside (12) of the plug-in system.

6. Plug-in system (1) according to Claim 5, **characterized in that** at least one of the first and second latching-in elements (22, 32) is in the form of an latching-in lug which is latchable to the other latching-in element (32, 22) in the form of a further latching-in lug or clip.

7. Plug-in system (1) according to one of Claims 1 to 6, **characterized in that** the upper part (2) has a first tilting element (24) and the lower part (3) has a second tilting element (34) which interact in such a manner that the upper part (2) is tiltable with respect to the lower part (3).

8. Plug-in system (1) according to one of Claims 1 to 7, **characterized in that** the upper part (2) has a third tilting element (25) and the protective device (4) has a fourth tilting element (45) which interact in such a manner that the protective device (4) is tiltable with respect to the upper part (2).

9. Plug-in system (1) according to one of Claims 1 to 7, **characterized in that** the upper part (2) has a fifth latching-in element and the protective device (4) has a sixth latching-in element which interact in such a manner that the protective device (4) is latchable to the upper part (2).

10. Plug-in system (1) according to one of Claims 1 to 8, **characterized in that** the lower part (3) has a third latching-in element (33) and the protective device (4) has a fourth latching-in element (43), the third and fourth latching-in elements (33, 43) being latchable into one another.

11. Plug-in system (1) according to one of Claims 1 to 9, **characterized in that** the lower part (3) has a fifth tilting element and the protective device (4) has a sixth tilting element which interact in such a manner that the protective device (4) is tiltable with respect to the lower part (3).

12. Plug-in system (1) according to Claim 10, **characterized in that** the upper part (2) has a first latching-in element (22) and the lower part (3) has a second latching-in element (32) for latching the upper part (2) to the lower part (3), **in that** the lower part (3) has a lateral edge (36) which is at a distance from the second latching-in element (32), and **in that** the minimum distance between the upper part (2) and the lower part (3) in a region between the second latching-in element (32) and the edge (36) is a maximum of 5 mm.

13. Plug-in system (1) according to Claim 11, **characterized in that** the upper part (2) has a first tilting element (24) and the lower part (3) has a second tilting element (34) which interact in such a manner that the upper part (2) is tiltable with respect to the lower part (3), and **in that** the first tilting element (24) of the upper part (2) is configured in such a manner that it overlaps the second tilting element (34) of the lower part at least by an overlapping region (243) of 3 mm.

14. Plug-in system (1) according to Claim 1, **characterized in that** the busbars (5) are all accessible from the top side (11) at the slot.

15. Upper part for use in a plug-in system (1) according to one of Claims 1 to 13.

16. Plug-in system according to one of the preceding claims, the plug-in system (1) having a plurality of busbars (5).

17. Plug-in system according to Claim 16, a plurality of protective devices (4) having electrical contacts (42) being fastened to the plug-in system in such a manner that the electrical contacts (42) make electrical contact with the busbars (5).

18. Plug-in system according to Claim 16 or 17, **characterized in that** the electrical contacts (42) of the protective devices can automatically make direct contact with the busbars (5) when the protective devices are plugged onto the plug-in system.

## Revendications

1. Système d'enfichage (1) présentant des emplacements d'enfichage recevant des appareils de protection (4) présentant des contacts électriques (42), le système d'enfichage présentant
une partie inférieure (3) située sur un côté inférieur (12) sur lequel des rails de courant (5) peuvent être disposés et une partie supérieure (2) en matériau électriquement isolant, qui peut être détachée de la partie inférieure (3) sans être détruite, située sur un côté supérieur (11) disposé face au côté inférieur (12),
la partie supérieure (2) présentant des ouvertures (27) à travers lesquelles les rails de courant (5) peuvent être mis directement en contact électrique avec les contacts électriques (42) des appareils de protection lorsque les appareils de protection sont enfichés sur le système d'enfichage,
les ouvertures (27) étant configurées de telle sorte que sur le côté supérieur (11), le système d'enfichage (1) soit protégé des contacts selon IP XXB,
la partie supérieure (2) et la partie inférieure (3) pouvant être encliquetées l'une dans l'autre ou vissées l'une sur l'autre de telle sorte que la partie supérieure (2) ne puisse être détachée de la partie inférieure (3) que par le côté inférieur (12) du système d'enfichage,
**caractérisé en ce que**
les emplacements d'enfichage donnent accès à tous les rails de courant (5) par le côté supérieur (11).

2. Système d'enfichage (1) selon la revendication 1, **caractérisé en ce que** dans le plan du côté supérieur (11), la partie supérieure (2) présente des premières nervures (26) telles qu'au moins l'un des rails de courant (6) puisse être recouvert partiellement ou complètement par les premières nervures (26) de la partie supérieure.

3. Système d'enfichage (1) selon la revendication 2, **caractérisé en ce que** les premières nervures (26) sont configurées de telle sorte qu'au moins un rail de courant (5) apte à être recouvert partiellement puisse être mis en contact latéralement avec un appareil de protection (4).

4. Système d'enfichage (1) selon l'une des revendications 1 à 3, **caractérisé en ce que** la partie supérieure (2) présente des deuxièmes nervures (28) disposées dans un plan perpendiculaire au côté supérieur (11), les deuxièmes nervures (28) étant disposées entre deux rails de courant (5).

5. Système d'enfichage (1) selon l'une des revendications 1 à 4, **caractérisé en ce que** la partie supérieure (2) présente un premier élément d'encliquetage (22) et la partie inférieure (3) un deuxième élément d'encliquetage (32) permettant d'encliqueter la partie supérieure (2) sur la partie inférieure (3), ces éléments d'encliquetage (22, 32) étant disposés et configurés de telle sorte que la partie supérieure (2) ne puisse être détachée de la partie inférieure (3) que par le côté inférieur (2) du système d'enfichage.

6. Système d'enfichage (1) selon la revendication 5, **caractérisé en ce qu'**au moins l'un des premiers et des deuxièmes éléments d'encliquetage (22, 32) est configuré comme bec d'encliquetage qui peut être encliqueté sur l'autre élément d'encliquetage (32, 22) configuré comme autre bec d'encliquetage ou comme patte.

7. Système d'enfichage (1) selon l'une des revendications 1 à 6, **caractérisé en ce que** la partie supérieure (2) présente un premier élément basculant (24) et la partie inférieure (3) un deuxième élément basculant (34) qui coopèrent de telle sorte que la partie supérieure (2) puisse être basculée contre la partie inférieure (3).

8. Système d'enfichage (1) selon l'une des revendications 1 à 7, **caractérisé en ce que** la partie supérieure (2) présente un troisième élément basculant (25) et l'appareil de protection (4) un quatrième élément basculant (45) qui coopèrent de telle sorte que l'appareil de protection (4) puisse être basculé contre la partie supérieure (2).

9. Système d'enfichage (1) selon l'une des revendications 1 à 7, **caractérisé en ce que** la partie supérieure (2) présente un cinquième élément d'encliquetage et l'appareil de protection (4) un sixième élément d'encliquetage qui coopèrent de telle sorte que l'appareil de protection (4) puisse être encliqueté sur la partie supérieure (2).

10. Système d'enfichage (1) selon l'une des revendications 1 à 8, **caractérisé en ce que** la partie inférieure présente un troisième élément d'encliquetage (33) et l'appareil de protection (4) un quatrième élément d'encliquetage (43), le troisième et le quatrième élément d'encliquetage (33, 43) pouvant s'encliqueter l'un dans l'autre.

11. Système d'enfichage (1) selon l'une des revendications 1 à 9, **caractérisé en ce que** la partie inférieure (3) présente un cinquième élément basculant et l'appareil de protection (4) un sixième élément basculant qui coopèrent de telle sorte que l'appareil de protection (4) peut être basculé contre la partie inférieure (3).

12. Système d'enfichage (1) selon la revendication 10, **caractérisé en ce que** la partie supérieure (2) présente un premier élément d'encliquetage (22) et la partie inférieure (3) un deuxième élément d'encliquetage (32) qui permet d'encliqueter la partie supérieure (2) sur la partie inférieure (3), **en ce que** la partie inférieure (3) présente un bord latéral (36) situé à distance du deuxième élément d'encliquetage (32) et **en ce que** dans une zone située entre le deuxième élément d'encliquetage (32) et le bord (36), la distance minimale entre la partie supérieure (2) et la partie inférieure (3) vaut au plus 5 mm.

13. Système d'enfichage (1) selon la revendication 11, **caractérisé en ce que** la partie supérieure (2) présente un premier élément basculant (24) et la partie inférieure (3) un deuxième élément basculant (34) qui coopèrent de telle sorte que la partie supérieure (2) puisse basculer contre la partie inférieure (3) et **en ce que** le premier élément basculant (24) de la partie supérieure (2) est configuré de telle sorte qu'il recouvre le deuxième élément basculant (34) de la partie inférieure au moins sur une zone de superposition (243) de 3 mm.

14. Système d'enfichage (1) selon la revendication 1, **caractérisé en ce que** sur l'emplacement d'encliquetage, les rails de courant (5) sont tous accessibles par le côté supérieur (11).

15. Partie supérieure destinée à être insérée dans un système d'enfichage (1) selon l'une des revendications 1 à 13.

16. Système d'enfichage (1) selon l'une des revendications précédentes, dans lequel le système d'enfichage (1) présente plusieurs rails de courant (5) .

17. Système d'enfichage (1) selon la revendication 16, dans lequel plusieurs appareils de protection (4) présentant des contacts électriques (42) sont fixés sur le système d'enfichage de telle sorte que les contacts électriques (42) sont en contact électrique avec les rails de courant (5).

18. Système d'enfichage (1) selon les revendications 16 ou 17, **caractérisé en ce que** les rails de courant (5) peuvent être mis en contact direct et automatiquement avec les contacts électriques (42) des appareils de protection lorsque les appareils de protection sont enfichés sur le système d'enfichage.
